(19) **Europäisches Patentamt**
**European Patent Office**
**Office européen des brevets**

(11) **EP 1 908 223 B1**

(12) **EUROPEAN PATENT SPECIFICATION**

(45) Date of publication and mention
of the grant of the patent:
**07.12.2016 Bulletin 2016/49**

(51) Int Cl.:
***H04L 12/43*** *(2006.01)*

(21) Application number: **06788301.7**

(22) Date of filing: **24.07.2006**

(86) International application number:
**PCT/US2006/028663**

(87) International publication number:
**WO 2007/016032 (08.02.2007 Gazette 2007/06)**

(54) **COMMUNICATING SCHEDULE AND NETWORK INFORMATION IN A POWERLINE NETWORK**

KOMMUNKATIONSPLAN UND NETZINFORMATIONEN IN EINEM POWERLINE-NETZ

COMMUNIQUER DES DONNÉES CALENDRIER ET RÉSEAU DANS UN RÉSEAU
D'ALIMENTATION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **27.07.2005 US 702717 P**

(43) Date of publication of application:
**09.04.2008 Bulletin 2008/15**

(73) Proprietor: **Sigma Designs Israel S.D.I Ltd.
69710 Tel-Aviv (IL)**

(72) Inventors:
• **RIEDEL, Neal**
**Carlsbad, CA 92009 (US)**
• **PEPONIDES, Yiorgos, M.**
**Encinitas, CA 92024 (US)**
• **PETRANOVICH, James, E.**
**Lajolla, CA 92037 (US)**
• **YOUNGE, Lawrence, W.**
**Ocala, FL 34480 (US)**
• **KATAR, Srinivas**
**Gainesville, FL 32608 (US)**
• **AYYAGARI, Deepak**
**Vancouver, WA 98684 (US)**
• **GAVETTE, Sherman, L.**
**Camas, WA 98607 (US)**
• **CHAN, Wai, Chung, Tony**
**Vancouver, WA 98683 (US)**

(74) Representative: **Vossius & Partner
Patentanwälte Rechtsanwälte mbB
Siebertstrasse 3
81675 München (DE)**

(56) References cited:
**WO-A1-96/34329          WO-A1-02/103943
WO-A2-2005/048047     US-A1- 2002 041 570
US-A1- 2002 141 523     US-B1- 6 172 616
US-B2- 6 882 634          US-B2- 6 888 844**

**EP 1 908 223 B1**

**Description**

BACKGROUND OF THE INVENTION

1. UNDERLINE FIELD OF THE INVENTION

The present invention relates generally to communication over an Ethernet-Class network and, more specifically to communication over a power line network.

2. BACKGROUND ART

The vision of the networked home has driven many a business plan, but product offerings to date have been too limited in capability or in market potential to achieve the dream. Home networking is different than networking in the workplace. The applications are different, the traffic patterns are different, and the media available to carry the data are different. Certainly home networking users will want to transfer files between their computers and share peripherals such as printers. They will want gateways to broadband access so they can share their Internet connection between multiple devices. Users will also want other services, such as voice-over-IP (VoIP), streaming media for entertainment, and support for multi-player networked games.

While some newer houses are wired with cables suitable for Ethernet, most are not. Thus, if choices for home network physical media are limited to phone wiring, wireless, and power line, there are a mixed bag of attributes.

There has been a proliferation of wireless networking and related components in recent years. However, wireless communication suffers from limited range and less than universal coverage, i.e. certain areas of the home cannot communicate with others. These issues are particularly prominent in certain types of construction that result in poor signal propagation, such as those using steel frame and brick walls. Solutions to these issues are expensive and complex, and require some technical acumen not available to the average homeowner.

Although telephone line networking may at first appear to be a solution, many households lack phone jacks at convenient locations to achieve the foreseeable benefits of home networking. For instance, some older houses may only have one phone jack located in the kitchen for use in the kitchen and other living areas (e.g. living room, family room, etc). Thus, it may be inconvenient or messy to provide network connections to remote devices. This picture is particularly unfavorable in less developed countries. Power plugs, on the other hand, are located in almost every room in the home, and some homes have multiple power outlets located on every wall of every room. The power line appears to be the most difficult medium of these three for communication, but it does have two appealing attributes. First, as with phone lines, no RF conversion hardware is needed and, thus, the cost can be low compared to wireless solutions. But more importantly, power outlets are almost everywhere someone might want to use a networked device at home.

The power line medium is a harsh environment for communication. For instance, the channel between any two outlets in a home has the transfer function of an extremely complicated transmission line network with many unterminated stubs and some having terminating loads of varying impedance. Such a network has an amplitude and phase response that varies widely with frequency. At some frequencies the transmitted signal may arrive at the receiver with relatively little loss, while at other frequencies it may be driven below the noise floor. Worse, the transfer function can change with time. This might happen because the homeowner has plugged a new device into the power line, or if some of the devices plugged into the network have time-varying impedance. As a result, the transfer function of the channel between outlet pairs may vary over a wide range. In some cases, a broad swath of bandwidth may be suitable for high quality transmission, while in other cases the channel may have a limited capacity to carry data.

With the potential for multiple networked devices communicating over the power line medium at any time, the issues involving the management and coordination of the networked devices bring about concerns regarding interference between networked devices and coordination and sharing of network resources. Accordingly, there is a need in the art for communication and coordination schemes that can effectively and efficiently address such concerns.

US 2002/141523 A1 relates to power-line modem networks, and more particularly, to an apparatus and method for providing time synchronization for data in devices of a power-line modem network. WO 02/103943 A1 relates generally to data communication systems and more particularly relates to a channel access method for a power line carrier based media access control (MAC) protocol. US 2002/041570 A1 relates to the field of communications, and, in particular, to a frame-based communications network.

SUMMARY OF THE INVENTION

The present invention is directed to a method and system for communicating schedule and network information in a powerline network. More specifically, the invention provides a method and system for synchronizing transmissions of all networked devices and communicating schedule information and basic network parameters to all networked devices to achieve optimal resource utilization in a powerline network.

In one aspect, a powerline network includes a number of stations including a central coordinator (CCo) for coordinating transmissions of each of the stations. The central coordinator includes a system clock and a network timer and is configurable to transmit a number of network timer values. Each of the network timer values can have 32 bits, for example. Each of the network timer values can be transmitted by the central coordinator in one of a number of beacons. Each of the beacons can include a frame control including a number of powerline network parameters. Each of the other stations is configurable to utilize the network timer values and a corresponding number of local timer values to estimate a frequency error between the system clock and a local clock and an offset between the network timer and a local timer.

The network timer (maintained at the CCo) and the local timer (maintained at non-CCo stations) are controlled by the system clock (i.e. the CCo's clock) and the local clock, respectively. Each of the other (i.e. non-CCo) stations is further configurable to utilize the frequency error and the offset to synchronize the local timer to the network timer. Each of the other stations is further configurable to utilize the frequency error and the offset to adjust the local clock for synchronized signal processing. The central coordinator is further configurable to transmit a schedule including resource allocations to each of the other stations.

Other features and advantages of the present invention will become more readily apparent to those of ordinary skill in the art after reviewing the following detailed description and accompanying drawings.

## BRIEF DESCRIPTION OF THE DRAWINGS

The features and advantages of the present invention will become more readily apparent to those ordinarily skilled in the art after reviewing the following detailed description and accompanying drawings, wherein:

FIG. 1 illustrates an overview of a HPAV (HomePlug Audio Video) system, according to one embodiment of the present application;

FIG. 2A illustrates a diagram of an exemplary powerline network configuration for the HPAV system in FIG. 1.

FIG. 2B illustrates a diagram of another exemplary powerline network configuration for the HPAV system in FIG. 1.

FIG. 2C illustrates a diagram of another exemplary powerline network configuration for the HPAV system in FIG. 1.

FIG. 3 illustrates a diagram of an exemplary HPAV transceiver for HPAV system 100 in FIG. 1.

FIG. 4 illustrates a diagram of an exemplary beacon period for HPAV system 100 in FIG. 1.

FIG. 5 illustrates a flow diagram for synchronizing local timers to a network timer according to one embodiment of the present invention.

## DETAILED DESCRIPTION OF THE INVENTION

Although the invention is described with respect to specific embodiments, the principles of the invention, as defined by the claims appended herein, can obviously be applied beyond the specifically described embodiments of the invention described herein. Moreover, in the description of the present invention, certain details have been left out in order to not obscure the inventive aspects of the invention. The details left out are within the knowledge of a person of ordinary skill in the art.

The drawings in the present application and their accompanying detailed description are directed to merely example embodiments of the invention. To maintain brevity, other embodiments of the invention which use the principles of the present invention are not specifically described in the present application and are not specifically illustrated by the present drawings. It should be borne in mind that, unless noted otherwise, like or corresponding elements among the figures may be indicated by like or corresponding reference numerals.

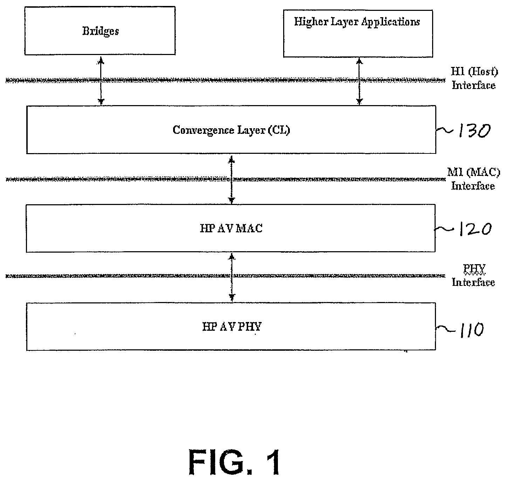

FIG. 1 illustrates an overview of HPAV (HomePlug Audio Video) system 100, according to one embodiment of the present application. As shown, HPAV system 100 includes PHY (Physical) layer 110, MAC (Media Access Control) layer 120 and convergence layer 130. When HPAV system 100 is in transmit mode, PHY layer 110 performs error-control correction, mapping into OFDM (Orthogonal Frequency Division Multiplexing) symbols, and generation of time-domain waveforms; MAC layer 120 determines the correct position of transmission, formats data frames into fixed-length entities for transmission on the channel and ensures timely and error-free delivery through Automatic Repeat Request (ARQ); and convergence layer 130 performs bridging, classification of traffic into connections, and data delivery smoothing functions. Conversely, when HPAV system 100 is in receive mode, PHY layer 110, MAC layer 120 and convergence layer 130 perform the corresponding functions in the reverse.

HPAV system 100 utilizes OFDM modulation technique due to its inherent adaptability in the presence of frequency selective channels, its resilience to narrow band interference, and its robustness to impulsive noise. Through the use of time-domain pulse shaping of the OFDM symbols, deep frequency notches can be achieved without the additional requirement of transmit notch filters. HPAV system 100 employs 1155 carriers, in the range from 1.80 MHz to 30.00 MHz.

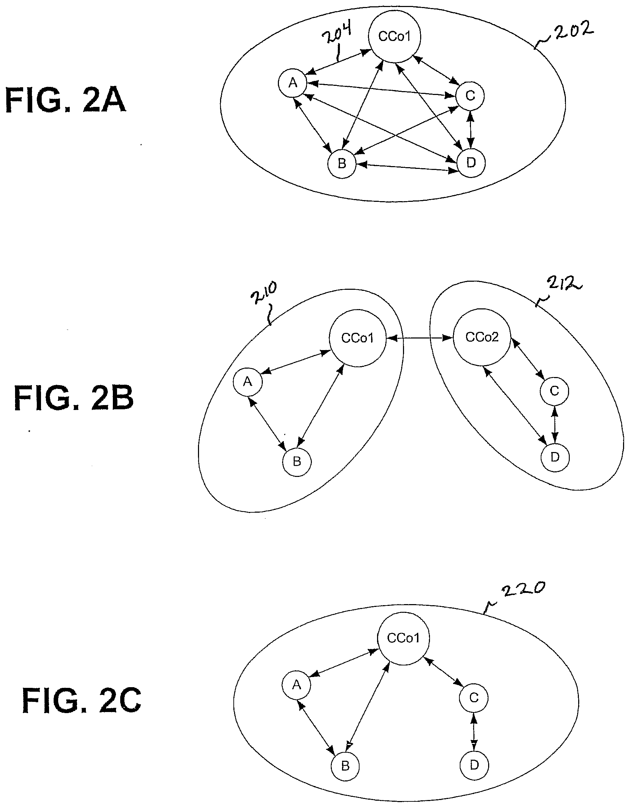

FIG. 2A illustrates an exemplary Audio Video Logical Network (AVLN) for HPAV system 100 in FIG. 1. An AVLN comprises a set of stations or devices that have the same Network Membership Key (NMK). In an AVLN, which is also generally referred to as a "powerline network" in the present application, one of the stations or devices becomes the Central Coordinator (CCo) device, which is responsible for coordinating the transmissions of all of the stations in the network, in order to achieve maximum overall network throughput as well as good Quality of Service (QoS) for each connection. The CCo is also responsible for authenticating stations that wish to join the network, managing encryption keys, and coordinating sharing of resources with neighbor networks. A CCo can either be preconfigured as such or be automatically selected through a specified selection procedure; however, only one station in an AVLN can function as a Central Coordinator (CCo) at one time. It is noted that the stations in an AVLN (i.e. a powerline network) can communicate via a powerline (i.e. an AC line).

As shown in FIG. 2A, AVLN 202 includes stations A, B, C, and D and CCo1. The Physical Network (PhyNet) of a given station is the set of stations that can physically communicate with the station - at least at the level of Frame Control (FC) and ROBO (robust) mode. A PhyNet is relative to a given station, and it is possible for PhyNets of physically close-by stations to be distinct. In the present application, it is noted that a double arrow line, such as double arrow line 204 in FIG. 2A, indicates an ability for two stations, such as station A and CCo1, to communicate on the PHY level. Also shown in FIG. 2A, all stations can communicate with each other and, consequently, the PhyNet of all stations is the same set {A, B, C, D, CCo1}, as shown in Table 1. Two stations belonging to an AVLN can communicate with each other if they belong to each other's PhyNet. Further shown in FIG. 2A, AVLN 202 coincides with the PhyNet of each station in AVLN 202.

**Table 1**

|  | Physical Networks (PhyNets) in ... | | |
|---|---|---|---|
| Station | Figure 2A | Figure 2B | Figure 2C |
| A | {A,B,C,D,CCo1} | {A,B,CCo1} | {A,B,CCo1} |
| B | {A,B,C,D,CCo1} | {A,B,CCo1} | {A,B,CCo1} |
| C | {A,B,C,D,CCo1} | {C,D,CCo2) | {C,D,CCo1} |
| D | {A,B,C,D,CCo1} | {C,D,CCo2} | {C,D} |
| CCo1 | {A,B,C,D,CCo1} | {A,B,CCo1,CCo2} | {A,B,C,CCo1} |
| CCo2 | N/A | {C,D,CCo1,CCo2} | N/A |

FIG. 2B illustrates two exemplary AVLNs for HPAV system 100 in Figure 1. As shown in FIG. 2B, AVLN 210 includes stations A and B and CCo1 and AVLN 212 includes CCo2 and stations C and D. The PhyNet for each station in FIG. 2B is shown in Table 1.

FIG. 2C illustrates an exemplary AVLN for HPAV system 100 in Figure 1. As shown in FIG. 2C, AVLN 220 includes CCo1 and stations A, B, C, and D. The PhyNet for each station in FIG. 2C is shown in Table 1.

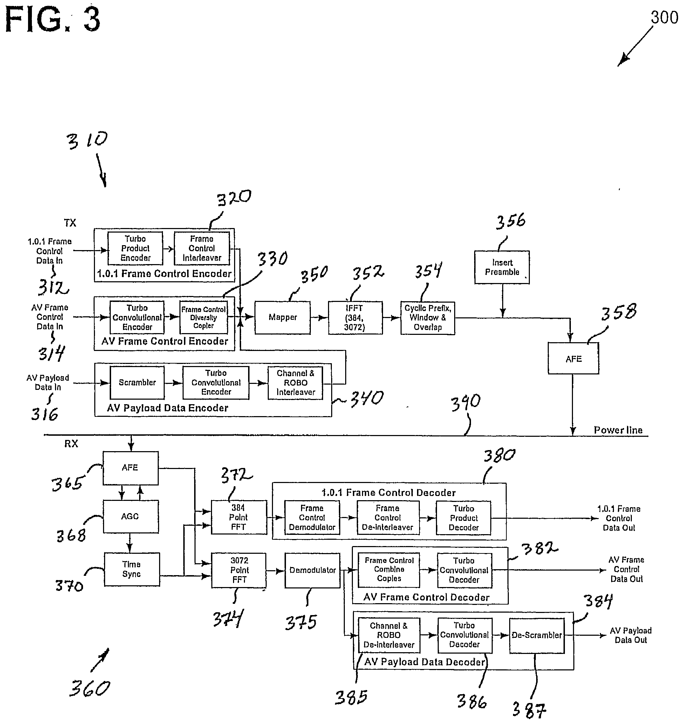

FIG. 3 shows a diagram of an exemplary HPAV transceiver for HPAV system 100 in FIG. 1. HPAV transceiver 300 includes transmitter side 310, which uses OFDM modulation, and receiver side 360. On transmitter side 310, the PHY layer (e.g. PHY layer 110 in Figure 1) receives its inputs from the MAC layer (e.g. MAC layer 120). Three separate processing chains are shown in FIG. 3 for different encoding for HomePlug 1.0.1 Frame Control (FC) data 312, HomePlug AV Frame Control data 314 and HomePlug AV Payload data 316, which are processed by 1.0.1 FC encoder 320, AV FC encoder 330 and AV payload data encoder 340, respectively. The outputs of the three encoders lead into a common OFDM modulation structure, including mapper 350, Inverse Fast Fourier Transform (IFFT) processor 352, cyclic prefix insertion, symbol window and overlap block 352, and preamble insertion 356, which eventually feeds Analog Front End (AFE) module 358 that couples the signal to power line medium 390.

At receiver side 360, AFE 365 operates with an Automatic Gain Controller (AGC) 368 and a time-synchronization module 370 to feed separate frame control and payload data recovery circuits. The frame control data is recovered by processing the received sample stream through 384-point FFT 372 for HomePlug 1.0.1 delimiters, and 3072-point FFT 374 for HomePlug AV, and through separate frame control decoders 380 and 382 for respective HomePlug 1.0.1 and HomePlug AV modes. The payload portion of the sampled time domain waveform, which contains only HomePlug AV formatted symbols, is processed through 3072-point FFT 374, demodulator 375, and through de-interleaver 385, turbo convolutional decoder 386, and de-scrambler 387 of AV payload data decoder 384 to recover the AV payload data.

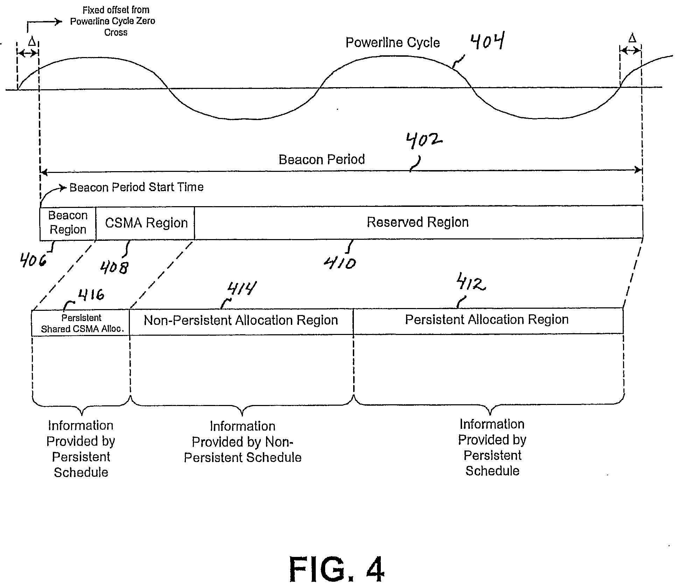

In the present invention, the CCo of a network (e.g. CCo1 of AVLN 202 in FIG. 2A) transmits a special signal called the beacon, which contains system-wide information, such as the network ID, the number of neighboring networks with which it coordinates, the current schedule of transmissions (e.g. which station is allowed to transmit and when), and the mode of the network (e.g. if it is in HPAV or in HPAV Hybrid mode). The beacon can also contain responses to messages from specific stations that request resources, request to join the network, or are delivered an encryption key, etc. The beacon is sent by the CCo at regular intervals that are tied to a specific phase of the power cycle, as discussed below in relation to FIG. 4. The beacon is transmitted in a so-called ROBO (Robust) mode, which is used for reliable reception of the beacon by other stations, where each station experiences a different channel characteristic from the CCo to the station. In the ROBO mode, modulation is independent of the characteristics of the channel, and robustness is achieved through low rate coding, low density modulation, and repetition and interleaving of the payload.

Each HPAV station (e.g. stations A, B, C, and D in FIG. 2A) monitors the channel for the presence of HP1.0 devices. When a station detects the presence of HP1.0 devices, it notifies the CCo (e.g. CC01 in FIG. 2A), which in turn switches the network (e.g. AVLN 202 in FIG. 2A) to the HPAV Hybrid mode. In the Hybrid mode operation, HPAV networks avoid interference from HP1.0 stations by coaxing the HP1.0 stations to transmit only in the CSMA/CA region of the beacon period. Thus HPAV stations and HP1.0 stations can coexist on the same medium, while HPAV stations maintain all the advantages of scheduled transmissions in the contention-free portion of the period.

FIG. 4 illustrates an exemplary beacon period synchronized to an exemplary powerline cycle, according to one embodiment of the present invention. As shown in FIG. 4, beacon period 402 (i.e. the time between two consecutive beacon transmissions) is substantially equal to two periods of powerline cycle 404. For example, for a powerline frequency of 60 Hz (i.e. for a 60 Hz system), the beacon period is nominally equal to 33.33 milliseconds (ms). For example, for a powerline frequency of 50 Hz (i.e. for a 50 Hz system), beacon Period 402 is nominally equal to 40 ms. In one embodiment, beacon period 402 can be precisely equal to two periods of powerline cycle 404. As further shown in FIG. 4, the start of beacon period 402 can be offset from the start of a powerline cycle by a fixed duration.

As also shown in FIG. 4, beacon period 402 includes beacon region 406, CSMA (Carrier Sense Multiple Access) region 408, and reserved region 410. Beacon region 406 includes the beacon, which is generated by a CCo and can include a Preamble, a Frame Control, and a beacon payload. The CCo ensures that the beacon remains synchronized to the powerline cycle, independent of the CCo local clock frequency.

Information describing allocations within beacon period 402 is broadcast in the beacon payload by using one or more beacon entries. Beacon region 406 also includes information regarding the duration of CSMA region 408 and reserved region 410. CSMA region 408 includes persistent shared CSMA allocation region 416, which is allocated to connections (i.e. sessions between transmitting and receiving stations) that use CSMA channel-access mechanism. Reserved region 410, which is the section of beacon period 402 during which only one station has permission to transmit, is further divided into persistent allocation region 412 and non-persistent allocation region 414. Persistent allocation region 412 is allocated to connections (i.e. sessions between transmitting and receiving stations), where the connections require QoS (Quality of Service). Non-persistent allocation region 414 is allocated to one or more of the following:

(a) active connections that have allocation in persistent allocation region 412 but may need extra capacity, either because the channel has deteriorated for a brief or longer period of time, or because the requirements of a particular application have increased (e.g. during video or audio fast forward);
(b) an additional CSMA period (e.g. when the CCo senses high level of collisions in the regular CSMA period); and
(c) special system needs, such as a discover beacon, whose purpose is to discover hidden nodes (i.e. stations) that cannot detect or hear the CCo.

The allocations in persistent allocation region 412 and the allocations in persistent shared CSMA allocation region 416 are controlled by a "Persistent Schedule," and the allocations in non-persistent allocation region 414 are controlled by a "Non-persistent Schedule." Both the Persistent Schedule and the Non-persistent Schedule are included in Broadcast messages in the beacon. The Persistent Schedule is valid for the current beacon period as well as for a number of subsequent beacon periods, where the number of subsequent beacon periods is indicated in the beacon. Since the Persistent Schedule remains valid for a number of subsequent beacon periods, it (i.e. the Persistent Schedule) allows all of the stations (e.g. stations A, B, C, and D in FIG. 2A) in the network (e.g. AVLN 202 in Figure 2A) to know the schedule, even if they occasionally fail to receive the beacon.

In addition to the Persistent Schedule, the system (e.g. HPAV system 100 in Figure 1) can support a Preview Schedule, which provides a preview of the next schedule. Thus, when a schedule change is necessary, the new schedule can be announced before it actually takes effect. The beacon can utilize a counter to indicate how many beacon periods will pass before the new schedule takes effect, for example. The Preview Schedule also allows some stations to lose beacon reception without losing schedule information.

In contrast to the Persistent Schedule, the Non-persistent Schedule is valid only for the beacon period in which it is announced. Consequently, if a station does not receive the beacon in a certain period, the station simply does not use any portion of non-persistent allocation region 414 during that period. On the other hand, when a station does receive the current beacon, it (i.e. the station) can take advantage of any allocation in non-persistent allocation region 414, either for its own use, or for the benefit of the system as a whole (e.g. in the form of the discover beacon).

The Persistent and Non-persistent Schedules advantageously allow a more reliable distribution of the schedule in an unreliable medium, while at the same time allowing a swift reaction to rapidly changing conditions, or implementation of system functions without specific allocation of resources to such functions.

The CCo assumes a special role in coordinating the activities of the powerline network, and ensuring maximal resource utilization. The CCo employs a beacon in its interactions with the rest of the stations in the powerline network. The format, timing, and sharing of the beacon between the various network functions is a critical aspect of the efficiency, high reliability, and functionality of the HPAV system (e.g. HPAV system 100 in FIG. 1). The beacon is transmitted by the CCo and received by all other stations in the powerline network, and it (i.e. the beacon) is synchronized to the powerline cycle (e.g. powerline cycle 404 in FIG. 4).

The synchronization of all transmissions from all stations to the beacon is critical in the powerline channel, because many interfering devices may cause disturbances, such as change of channel gain and phase, and level of noise, that are synchronous to the powerline cycle and occupy only a portion of that cycle. Synchronizing all transmissions to the powerline cycle allows superior resource utilization. This function is achieved by specifying transmission regions in the beacon period (i.e. the time interval between two consecutive beacon transmissions) in terms of the position of the beacon transmission.

Synchronization of the signal processing clock (i.e. the local clock) of all stations to the CCo minimizes inter-channel interference between carriers of the OFDM (Orthogonal Frequency Division Multiplexing) signal, and loss of performance due to frequency error estimation at the receiver, which in turn allows optimal capacity utilization of the available links. In one embodiment, this function is performed by including the value of a 25-MHz clock at the CCo referred to as NTB (Network Time Base) in the beacon, and requiring all stations to observe the values of the NTB in multiple Beacon instances and estimate the difference between the NTB values and the corresponding local 25-MHz timer values, called LTmr (Local Timer).

The LTmr is either expressly adjusted to follow the NTB, or its frequency difference with the NTB is estimated and is used in correcting the operation of the local station. For example, the local station may use this estimate to resample a digital waveform it generates with its local clock to generate a waveform that would be generated with a perfectly synchronized signal processing clock.

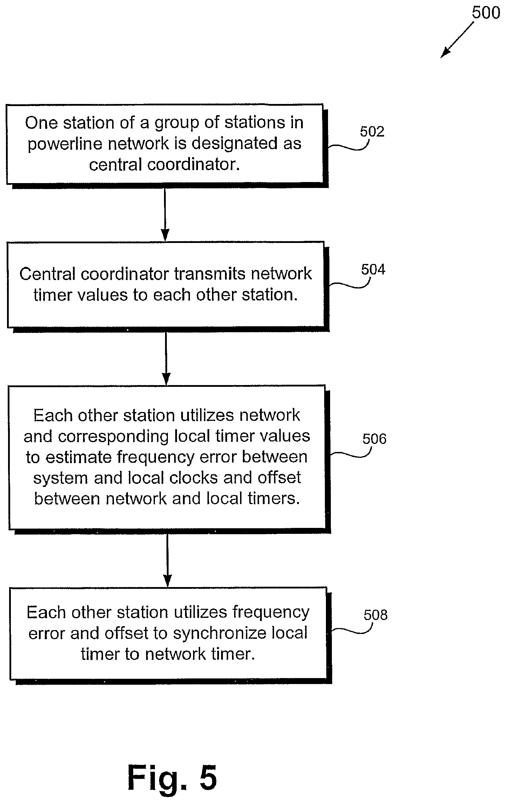

Referring now to FIG. 5, there is shown exemplary flowchart 500 depicting a method for synchronizing local timers in respective stations to a network timer in a CCo in a powerline network in accordance with one embodiment of the present invention. Certain details and features have been left out of flowchart 500 of FIG. 5 that are apparent to a person of ordinary skill in the art. For example, a step may consist of one or more sub-steps or may involve specialized equipment, as known in the art. While steps 502 through 508 shown in flowchart 500 are sufficient to describe one embodiment of the present invention, other embodiments of the invention may utilize steps different from those shown in flowchart 500.

Beginning at step 502, one station of a group of stations (e.g. stations A, B, C, and D in FIG. 2A) in a powerline network (e.g. AVLN 202 in FIG. 2A) is designated as CCo (e.g. CCo1). The CCo can be designated as CCo either by being preconfigured as such or by being automatically selected through a specified selection procedure, for example. At step 504, the CCo transmits values of a network timer to each other station in the powerline network. The network timer, which is maintained by the CCo and which is also referred to as the Network Time Base (NTB), is controlled by the CCo's system clock. For example, the network timer can be clocked by a 25 MHz clock that is derived from the CCo's system clock. For example, the network timer can be a 32-bit timer. Each network timer value is transmitted by the CCo in a beacon, which is located in a beacon region (e.g. beacon region 406 in FIG. 4) of a beacon period (e.g. beacon period 402 in FIG. 4).

The CCo's system clock and the network timer are used to correct (i.e. adjust) the local clock used for processing of transmit and receive signals at all of the non-CCo stations in the powerline network, announcing the further beacon position and schedule within the beacon period (e.g. beacon period 402 in FIG. 4), and derive an ATS (Arrival Time Stamp) and perform a jitter control function. The network timer value can be embedded into a frame control of a beacon as a 32-bit BTS (Beacon Time Stamp). The BTS is the value of the NTB (i.e. network timer) at the BTT (Beacon Transit Time), which is defined as the time instant at which the first non-zero sample of the beacon PPDU (PHY Protocol Data Unit) appears on the transmitter's analog output.

At step 506, each non-CCo station utilizes the network timer values and corresponding local timer values to estimate a frequency error between the system clock and a local clock and to estimate an offset between the network timer and a local timer, which is controlled by the local clock. When a beacon is detected by each non-CCo station, the non-CCo station can store the value (e.g. a 32-bit value) of its local timer at the time of reception of the beginning of the AV preamble signal of beacon $n$, denoted as $LTmr_n$ (i.e. the local timer value corresponding to beacon $n$). The received beacon includes the beacon time stamp (i.e. the network timer value), which is denoted as $BTS_n$. Propagation delay between CCo (i.e. the transmitter) and each non-CCo station (i.e. a receiver) can be ignored; however, if it is known, it could be compensated for in the computation of the offset.

The following formulas can be used to estimate the clock frequency and timer offset errors:

$$FreqError_1 = (BTS_1 - BTS_0) / (LTmr_1 - LTMr_0) - 1 \quad \text{(formula 1)};$$

$$Offset_1 = BTS_1 - LTmr_1 \quad \text{(formula 2)};$$

$$FreqError_n = FreqError_{n-1} + w_f \bullet ((BTS_n - BTS_{n-1}) / (LTmr_n - LTmr_{n-1}) - 1 - FreqError_{n-1}), \text{ for } n \geq 2 \quad \text{(formula 3)};$$

and

$$Offset_n = Offset_{n-1} + FreqError_n \bullet (LTmr_n - LTmr_{n-1}) + w_o \bullet ((BTS_n - LTmr_n)$$
$$- (Offset_{n-1} - FreqError_n \bullet (BTS_n - LTmr_{n-1}))), \text{ for } n \geq 2 \quad \text{(formula 4)}.$$

In respective formulas 3 and 4, $w_f$ and $w_o$ are weighting constants of the form $\frac{1}{2}^k$, where $k$ is a positive integer. Larger values *of k* provide better filtering of the uncertainty between each $BTS_n$ and $LTmr_n$ pair caused by factors such as preamble detection jitter. Larger values of $k$ result in a longer period of time to achieve convergence to the correct estimate of frequency error. When tracking a beacon, it is recommended that a small value of $k$ be used for the first samples and increased to the ultimate value.

Once $FreqError_n$ (in formula 3) and $Offset_n$ (in formula 4) are known to be accurate, the relationship between the network time base estimate ($NTB\_STA_i$) and the local timer at instance *i* ($LTmr_i$) can be determined by the formulas:

$$NTB\_STA_i = LTmr_i + Offset_n + FreqError_n \bullet (LTmr_i - LTmr_n) \quad \text{(formula 5)};$$

and

$$LTmr_i = (NTB\_STA_i + FreqError_n \bullet LTmr_n - Offset_n) / (1 + FreqError_n)$$
$$\text{(formula 6)}.$$

In formulas 5 and 6, $Offset_n$, $FreqError_n$, and $LTmr_n$ are the values computed from the most recently received beacon.

At step 508, each of the non-CCo stations in the powerline network utilize the frequency error and the offset to synchronize the local timer to the network timer. The local timer, which can be a 32-bit timer, for example, is synchronized in frequency and absolute value to the network timer of the CCo. Each of the non-CCo stations can utilize the frequency error and offset to adjust their local clock to achieve synchronized processing of transmit and receive signals.

The network ID, the number of neighbor powerline networks with which the powerline network in the present embodiment is coordinating, and the mode of the powerline network (i.e. whether it has sensed the presence of HP1.0 devices and is running in the Hybrid mode that accommodates HP1.0 coexistence) are fields in the frame control of the beacon. These fields are fixed and are included in every transmission of the beacon, and are of interest to all stations in the powerline network, as well as the CCo's of neighboring powerline networks. This feature allows fast parsing of the fields and appropriate action by the receiving stations.

The schedule defines the structure of the beacon period (e.g. beacon period 402 in FIG. 4), such as the division into beacon regions, CSMA/CA region(s), persistent CFP (contention-free period), and non-persistent CFP. The schedule further defines the allocation of specific regions with the CFP to specific connections. The schedule may also be of interest to all network stations in whole or in part, and is contained in a broadcast message because its length and complexity can vary depending on the current traffic profile on the network.

In addition to defining the network timing and management of the wire resource, the CCo performs association, authentication and key distribution functions, and coordination of resources with neighboring powerline networks. These functions are accomplished by including MAC Management Messages or Entries (MME's) within the beacon payload. Most often these messages are unicast to a particular station that is involved in the function. Neighbor powerline networks are formed when stations that have the potential and capability to communicate with each other do not belong to the same community of interest, such as when HPAV networks are set up in two neighboring apartments. Each community of interest is formed during the authorization process under guidance from its owner.

Thus, as discussed above, the present invention provides an HPAV system including stations that communicate via a powerline in a powerline network, where a CCo (central coordinator) transmits a network timer value to each station, and where the network timer value is transmitted in a beacon. In the invention's HPAV system, each station in the powerline network utilizes the network timer value to synchronize its local timer to a network time controlled by the CCo's system clock. As a result, the present invention advantageously achieves effective and efficient communication of schedule and network information in an HPAV system.

From the above description of the invention it is manifest that various techniques can be used for implementing the concepts of the present invention without departing from its scope. Moreover, while the invention has been described with specific reference to certain embodiments, a person of ordinary skill in the art would recognize that changes could be made in form and detail without departing from the spirit and the scope of the invention. For example, it is contemplated that the circuitry disclosed herein can be implemented in software and/or hardware, and the software may be stored in any storage medium or memory. The described embodiments are to be considered in all respects as illustrative and not restrictive. It should also be understood that the invention is not limited to the particular embodiments described herein, but is capable of many rearrangements, modifications, and substitutions without departing from the scope of the invention.

**Claims**

1. A powerline network comprising:

   a plurality of stations (A, B, C, D) including a central coordinator (CCo) configurable to transmit beacon signals for coordinating transmissions of each of said plurality of stations;
   wherein said central coordinator has a network timer controlled by a system clock; and
   wherein said beacon signals contain a current schedule of transmissions and network timer values as beacon timestamps used to adjust local clocks of non-CCo stations of said plurality of stations to enable said non-CCo stations of said plurality of stations to utilize said network timer values and corresponding local timer values to estimate a frequency error between said system clock and a local clock and an offset between said network timer and a local timer, and **characterized by** allowing each of said non-CCo stations of said plurality of stations to utilize its local clock to generate a digital waveform and to further use said frequency error to resample said digital waveform for synchronized signal processing.

2. The powerline network of claim 1 and wherein said local timer values are local timestamps.

3. The powerline network of claim 1, wherein each of said network timer values comprises 32 bits.

4. The powerline network of claim 1, wherein each of said beacon signals includes a frame control including powerline network parameters.

5. The powerline network of claim 1, wherein said central coordinator is further configurable to transmit a schedule including resource allocations to said each non-CCo station of said plurality of stations.

6. The powerline network of claim 5 and wherein said schedule indicates which of said plurality of stations is allowed to transmit and when.

7. A method for coordinating transmissions of a plurality of stations for communication via a powerline, a first station of said plurality of stations being designated as a central coordinator (CCo), the CCo having a network timer controlled by a system clock, said method comprising;
   receiving on non-CCo stations of said plurality of stations beacon signals from said CCo, said beacon signals comprising a current schedule of transmissions and network timer values as beacon timestamps used to adjust local clocks of said non-CCo stations of said plurality of stations; and
   utilizing (506) said network timer values and corresponding local timer values by said non-CCo stations of said plurality of stations to estimate a frequency error between said system clock and a local clock and an offset between said network timer and a local timer, and **characterized by** each of said non-CCo stations of said plurality of stations utilizing (508) its local clock to generate a digital waveform and to further use said frequency error to resample said digital waveform for synchronized signal processing.

8. The method of claim 7 and wherein said local timer values are local timestamps.

9. The method of claim 7, and also comprising receiving by each said non-CCo station of said plurality of stations a schedule including resource allocations from said central coordinator.

10. The method of claim 9 and wherein said schedule indicates which of said plurality of stations is allowed to transmit and when.

11. The method of claim 7, wherein each of said network timer values comprises 32 bits.

12. A device for communication via a powerline in a powerline network including a central coordinator (CCo), the CCo having a network timer controlled by a system clock, said device comprising:

a receiver to receive beacon signals from the CCo, each comprising a current schedule of transmission and network timer values as beacon timestamps used to adjust a local clock in the device; and
a synchronizer to utilize said network timer values and corresponding local timer values to estimate a frequency error between said system clock and a local clock and an offset between said network timer and a local timer, and **characterized by** allowing the device to use its local clock to generate a digital waveform and to further use said frequency error to resample said digital waveform for synchronized signal processing.

13. The device of claim 12 and wherein said local timer values are local timestamps.

14. The device of claim 12, wherein said receiver comprises a schedule receiver to receive a schedule including resource allocations from said central coordinator.

15. The device of claim 14 and wherein said schedule indicates which of said plurality of stations is allowed to transmit and when.

16. The device of claim 12, wherein each of said beacon signals includes a frame control including powerline network parameters.

17. The device of claim 12, wherein each of said network timer values comprises 32 bits.

**Patentansprüche**

1. Stromleitungsnetzwerk, mit:

mehreren Stationen (A, B, C, D), die einen zentralen Koordinator (CCo) umfassen, der konfigurierbar ist, Beacon-Signale zum Koordinieren von Sendungen von jeder der mehreren Stationen zu senden;
wobei der zentrale Koordinator einen Netzwerkzeitgeber aufweist, der durch einen Systemtakt gesteuert wird; und
wobei die Beacon-Signale einen gegenwärtigen Sendezeitplan und Netzwerkzeitgeberwerte als Beacon-Zeitstempel enthalten, die verwendet werden, um lokale Takte von Nicht-CCo-Stationen der mehreren Stationen einzustellen, um es den Nicht-CCo-Stationen der mehreren Stationen zu ermöglichen, die Netzwerkzeitgeberwerte und entsprechende lokale Zeitgeberwerte zu nutzen, um eine Frequenzabweichung zwischen dem Systemtakt und einem lokalen Takt und einen Versatz zwischen dem Netzwerkzeitgeber und einem lokalen Zeitgeber zu schätzen, und das **dadurch gekennzeichnet ist,**
**dass** es jeder der Nicht-CCo-Stationen der mehreren Stationen ermöglicht wird, ihren lokalen Takt zu nutzen, um eine digitale Wellenform zu erzeugen, und ferner die Frequenzabweichung zu verwenden, um die digitale Wellenform für eine synchronisierte Signalverarbeitung neu abzutasten.

2. Stromleitungsnetzwerk nach Anspruch 1, wobei die lokalen Zeitgeberwerte lokale Zeitstempel sind.

3. Stromleitungsnetzwerk nach Anspruch 1, wobei jeder der Netzwerkzeitgeberwerte 32 Bit aufweist.

4. Stromleitungsnetzwerk nach Anspruch 1, wobei jedes der Beacon-Signale eine Rahmensteuerung aufweist, die Stromleitungsnetzwerkparameter enthält.

**5.** Stromleitungsnetzwerk nach Anspruch 1, wobei der zentrale Koordinator ferner konfigurierbar ist, einen Zeitplan zu senden, der Ressourcenzuweisungen an jede Nicht-CCo-Station der mehreren Stationen enthält.

**6.** Stromleitungsnetzwerk nach Anspruch 5, wobei der Zeitplan anzeigt, welche der mehreren Stationen senden darf und wann.

**7.** Verfahren zum Koordinieren von Sendungen von mehreren Stationen zur Kommunikation über eine Stromleitung, wobei eine erste Station der mehreren Stationen als ein zentraler Koordinator (CCo) bestimmt wird, wobei der CCo einen durch einen Systemtakt gesteuerten Netzwerkzeitgeber aufweist, wobei das Verfahren aufweist:

Empfangen an Nicht-CCo-Stationen der mehreren Stationen von Beacon-Signalen vom CCo, wobei die Beacon-Signale einen gegenwärtigen Sendezeitplan und Netzwerkzeitgeberwerte als Beacon-Zeitstempel aufweisen, die verwendet werden, um lokale Takte der Nicht-CCo-Stationen der mehreren Stationen einzustellen; und Nutzen (506) der Netzwerkzeitgeberwerte und entsprechender lokaler Zeitgeberwerte durch die Nicht-CCo-Stationen der mehreren Stationen, um eine Frequenzabweichung zwischen dem Systemtakt und einem lokalen Takt und einen Versatz zwischen dem Netzwerkzeitgeber und einem lokalen Zeitgeber zu schätzen, und das **dadurch gekennzeichnet ist, dass** jede der Nicht-CCo-Stationen der mehreren Stationen ihren lokalen Takt nutzt (508), um eine digitale Wellenform zu erzeugen und um ferner die Frequenzabweichung zu verwenden, um die digitale Wellenform für eine synchronisierte Signalverarbeitung neu abzutasten.

**8.** Verfahren nach Anspruch 7, wobei die lokalen Zeitgeberwerte lokale Zeitstempel sind.

**9.** Verfahren nach Anspruch 7, das außerdem das Empfangen durch jede Nicht-CCo-Station der mehreren Stationen eines Zeitplans aufweist, der Ressourcenzuweisungen vom zentralen Koordinator enthält.

**10.** Verfahren nach Anspruch 9, wobei der Zeitplan anzeigt, welche der mehreren Stationen senden darf und wann.

**11.** Verfahren nach Anspruch 7, wobei jeder der Netzwerkzeitgeberwerte 32 Bit aufweist.

**12.** Vorrichtung zur Kommunikation über eine Stromleitung in einem Stromleitungsnetzwerk, das einen zentralen Koordinator (CCo) aufweist, wobei der CCo einen durch einen Systemtakt gesteuerten Netzwerkzeitgeber aufweist, wobei die Vorrichtung aufweist:

einen Empfänger, um Beacon-Signale vom CCo zu empfangen, die jeweils einen gegenwärtigen Sendezeitplan und Netzwerkzeitgeberwerte als Beacon-Zeitstempel verwendet, um einen lokalen Takt in der Vorrichtung einzustellen; und eine Synchronisationseinrichtung, um die Netzwerkzeitgeberwerte und entsprechende lokale Zeitgeberwerte zu nutzen, um eine Frequenzabweichung zwischen dem Systemtakt und einem lokalen Takt und einen Versatz zwischen dem Netzwerkzeitgeber und einem lokalen Zeitgeber zu schätzen, und die **dadurch gekennzeichnet ist, dass** es der Vorrichtung ermöglicht wird, ihren lokalen Takt zu verwenden, um eine digitale Wellenform zu erzeugen, und ferner die Frequenzabweichung zu verwenden, um die digitale Wellenform für eine synchronisierte Signalverarbeitung neu abzutasten.

**13.** Vorrichtung nach Anspruch 12, wobei die lokalen Zeitgeberwerte lokale Zeitstempel sind.

**14.** Vorrichtung nach Anspruch 12, wobei der Empfänger einen Zeitplanempfänger aufweist, um einen Zeitplan zu empfangen, der Ressourcenzuweisungen vom zentralen Koordinator enthält.

**15.** Vorrichtung nach Anspruch 14, wobei der Zeitplan anzeigt, welche der mehreren Stationen senden darf und wann.

**16.** Vorrichtung nach Anspruch 12, wobei jedes der Beacon-Signale eine Rahmensteuerung aufweist, die Stromleitungsnetzwerkparameter enthält.

**17.** Vorrichtung nach Anspruch 12, wobei jeder der Netzwerkzeitgeberwerte 32 Bit aufweist.

**Revendications**

1.  Réseau courant porteur, comprenant :

    une pluralité de stations (A, B, C, D) disposant d'un coordinateur central (CCo) pouvant être configuré pour transmettre des signaux de balise afin de coordonner les transmissions de chaque station de la pluralité de stations ;
    où le coordinateur central est pourvu d'un minuteur réseau commandé par une horloge système ; et
    où les signaux de balise contiennent un calendrier actuel de transmissions et des valeurs de minuteur réseau en tant qu'horodatages de balise utilisés pour régler des horloges locales de stations non-CCo de la pluralité de stations, afin de permettre auxdites stations non-CCo de la pluralité de stations d'exploiter les valeurs de minuteur réseau et les valeurs de minuteur local correspondantes pour évaluer une erreur de fréquence entre l'horloge système et une horloge locale, et un décalage entre le minuteur réseau et un minuteur local, **caractérisé en ce que** chacune des stations non-CCo de la pluralité de stations est autorisée à utiliser son horloge locale pour générer une forme d'onde numérique et à exploiter en outre l'erreur de fréquence pour rééchantillonner la forme d'onde numérique pour un traitement de signal synchronisé.

2.  Réseau courant porteur selon la revendication 1, où les valeurs de minuteur local sont des horodatages locaux.

3.  Réseau courant porteur selon la revendication 1, où chacune des valeurs de minuteur réseau comprend 32 bits.

4.  Réseau courant porteur selon la revendication 1, où chacun des signaux de balise comprend une commande de trame incluant des paramètres de réseau courant porteur.

5.  Réseau courant porteur selon la revendication 1, où le coordinateur central peut en outre être configuré pour transmettre un calendrier comprenant des allocations de ressources à chacune des stations non-CCo de la pluralité de stations.

6.  Réseau courant porteur selon la revendication 5, où le calendrier indique quelle station de la pluralité de stations est autorisée à transmettre, et quand.

7.  Procédé de coordination de transmissions d'une pluralité de stations pour la communication par courant porteur en ligne, une première station de ladite pluralité de stations étant désignée comme coordinateur central (CCo), ledit CCo étant pourvu d'un minuteur réseau commandé par une horloge système, ledit procédé comprenant :

    la réception sur des stations non-CCo de la pluralité de stations de signaux de balise du CCo, lesdits signaux de balise comprenant un calendrier actuel de transmissions et des valeurs de minuteur réseau en tant qu'horodatages de balise utilisés pour régler des horloges locales des stations non-CCo de la pluralité de stations ; et l'exploitation (506) des valeurs de minuteur réseau et des valeurs de minuteur local correspondantes par les stations non-CCo de la pluralité de stations afin d'évaluer une erreur de fréquence entre l'horloge système et une horloge locale et un décalage entre le minuteur réseau et un minuteur local, **caractérisé en ce que** chacune des stations non-CCo de la pluralité de stations utilise (508) son horloge locale pour générer une forme d'onde numérique et utilise en outre l'erreur de fréquence pour rééchantillonner la forme d'onde numérique pour un traitement de signal synchronisé.

8.  Procédé selon la revendication 7, où les valeurs de minuteur local sont des horodatages locaux.

9.  Procédé selon la revendication 7, comprenant en outre la réception par chacune des stations non-CCo de la pluralité de stations d'un calendrier comprenant des allocations de ressources du coordinateur central.

10. Procédé selon la revendication 9, où le calendrier indique quelle station de la pluralité de stations est autorisée à transmettre, et quand.

11. Procédé selon la revendication 7, où chacune des valeurs de minuteur réseau comprend 32 bits.

12. Dispositif de communication par courant porteur en ligne dans un réseau courant porteur comprenant un coordinateur central (CCo), ledit CCo étant pourvu d'un minuteur réseau commandé par une horloge système, ledit dispositif comprenant :

un récepteur destiné à recevoir des signaux de balise du CCo comprenant chacun un calendrier actuel de transmission et des valeurs de minuteur réseau en tant qu'horodatages de balise utilisés pour régler une horloge locale dans le dispositif ; et

un synchroniseur destiné à utiliser les valeurs de minuteur réseau et des valeurs de minuteur local correspondantes pour évaluer une erreur de fréquence entre l'horloge système et une horloge locale et un décalage entre le minuteur réseau et un minuteur local,

**caractérisé en ce que** ledit dispositif est autorisé à utiliser son horloge locale pour générer une forme d'onde numérique et à exploiter en outre l'erreur de fréquence pour rééchantillonner la forme d'onde numérique pour un traitement de signal synchronisé.

13. Dispositif selon la revendication 12, où les valeurs de minuteur local sont des horodatages locaux.

14. Dispositif selon la revendication 12, où le récepteur comprend un récepteur de calendrier destiné à recevoir un calendrier comprenant des allocations de ressources du coordinateur central.

15. Dispositif selon la revendication 14, où le calendrier indique quelle station de la pluralité de stations est autorisée à transmettre, et quand.

16. Dispositif selon la revendication 12, où chacun des signaux de balise comprend une commande de trame incluant des paramètres de réseau courant porteur.

17. Dispositif selon la revendication 12, où chacune des valeurs de minuteur réseau comprend 32 bits.

| Bridges | | Higher Layer Applications |
|---------|--|---------------------------|

H1 (Host)
Interface

| Convergence Layer (CL) | ~130 |
|------------------------|------|

M1 (MAC)
Interface

| HP AV MAC | ~120 |
|-----------|------|

PHY
Interface

| HP AV PHY | ~110 |
|-----------|------|

# FIG. 1

FIG. 2A

FIG. 2B

FIG. 2C

FIG. 3

300

310

320

**TX**

1.0.1 Frame Control Data In
312

330

**1.0.1 Frame Control Encoder**
Turbo Product Encoder → Frame Control Interleaver

AV Frame Control Data In
314

**AV Frame Control Encoder**
Turbo Convolutional Encoder → Frame Control Diversity Copier

350
Mapper

352
IFFT (384, 3072)

354
Cyclic Prefix, Window & Overlap

356
Insert Preamble

358
AFE

AV Payload Data In
316

**AV Payload Data Encoder**
Scrambler → Turbo Convolutional Encoder → Channel & ROBO Interleaver
340

340

Power line

**RX**

365 AFE

368 AGC

370 Time Sync

372
384 Point FFT

374
3072 Point FFT

375
Demodulator

380
**1.0.1 Frame Control Decoder**
Frame Control Demodulator → Frame Control De-Interleaver → Turbo Product Decoder
→ 1.0.1 Frame Control Data Out

382
**AV Frame Control Decoder**
Frame Control Combine Copies → Turbo Convolutional Decoder
→ AV Frame Control Data Out

384
**AV Payload Data Decoder**
Channel & ROBO De-Interleaver → Turbo Convolutional Decoder → De-Scrambler
→ AV Payload Data Out

385  386  387

360

Fixed offset from
Powerline Cycle Zero
Cross

Δ

Powerline Cycle 404

402

Δ

Beacon Period

Beacon Period Start Time

| Beacon Region | CSMA Region | Reserved Region |
|---|---|---|

406

408

410

412

416

414

| Persistent Shared CSMA Alloc. | Non-Persistent Allocation Region | Persistent Allocation Region |
|---|---|---|

Information
Provided by
Persistent
Schedule

Information
Provided by Non-
Persistent Schedule

Information
Provided by
Persistent
Schedule

# FIG. 4

500

One station of a group of stations in powerline network is designated as central coordinator. 502

Central coordinator transmits network timer values to each other station. 504

Each other station utilizes network and corresponding local timer values to estimate frequency error between system and local clocks and offset between network and local timers. 506

Each other station utilizes frequency error and offset to synchronize local timer to network timer. 508

# Fig. 5

**EP 1 908 223 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002141523 A1
- WO 02103943 A1
- US 2002041570 A1